# DEMANDE DE BREVET EUROPEEN

(11) **EP 3 995 715 A1**
(43) Date de publication de la demande: **11.05.2022**
(21) Numéro de dépôt: 21205050.4
(22) Date de dépôt: 27.10.2021
(51) Int. Cl.: F16D 65/00

(54) **DISPOSITIF ET SYSTEME DEPOLLUANT DE RECUPERATION DE PARTICULES DE POUSSIERES DE FREINAGE**

(30) Priorité: 10.11.2020 FR 2011506
(71) Demandeur: AKWEL, 01410 Champfromier (FR)
(72) Inventeur: GUERRY, Pascal, 68580 Seppois le Haut (FR)

(57) **Abrégé**

Ce dispositif (12) dépolluant comprend un boîtier (14) avec un orifice d'entrée (20) pour un flux d'air sale chargé en particules et un orifice de sortie (30) pour l'évacuation d'un flux d'air purifié, et au moins un organe de séparation, logé dans le boîtier (14), pour séparer des particules du flux d'air sale, au travers duquel le flux d'air circule entre les orifices d'entrée (20) et de sortie (30). Selon l'invention, le dispositif (12) comprend un organe d'aspiration (50) comprenant un corps (52) pourvu d'un orifice (54) d'admission configuré pour être raccordé à l'orifice de sortie (30) du boîtier (14), d'un orifice de refoulement (56) et d'un conduit de passage de fluide s'étendant entre les deux orifices (54, 56). En outre, l'organe (50) comprend une buse d'injection d'un fluide de propulsion dans le conduit et le corps (52) comprend un orifice d'alimentation en fluide de propulsion raccordé à la buse, le conduit présentant un col d'étranglement d'une section de passage de fluide, localisée en aval de la buse, de façon à provoquer une aspiration du flux d'air entrant au travers de l'organe (50).

## Description

La présente invention concerne un dispositif de récupération de particules de poussières de freinage, en particulier émises lors d'une action de freinage d'un véhicule automobile. Le domaine d'application de l'invention concerne plus particulièrement mais non exclusivement la récupération des poussières de freinage générées lors d'une action de freinage d'un véhicule, qu'il soit routier (par exemple : automobile, poids lourd, motocyclette) ou ferroviaire (train, tramway métro).

De manière générale, le freinage d'un véhicule ferroviaire ou routier, et en particulier d'un véhicule automobile, est réalisé par un système de freinage à friction, comme c'est le cas par exemple des « freins à disque ». L'invention peut s'appliquer à d'autres types de systèmes de freinage, tels que les freins à tambour ou tout autre type de frein à friction. Un frein à disque comprend un disque tournant autour d'un axe fixé sur un moyeu d'une roue du véhicule et des plaquettes de frein pourvues de garnitures réalisées en matériau de friction et montées de part et d'autre du disque par l'intermédiaire d'un étrier de frein.

Lors d'une action de freinage, les plaquettes de frein mobiles par rapport à l'étrier viennent en appui sur les disques liés en rotation aux roues du véhicules, afin d'appliquer dessus un couple de freinage et permettre le freinage par conversion de l'énergie cinétique en chaleur.

Or, à chaque action de freinage, le frottement des plaquettes de frein produit, en plus du dégagement de chaleur, une usure des matériaux de friction des garnitures, ainsi qu'une usure plus modérée des disques ou des tambours métalliques. Cette usure par abrasion produit une émission de particules importante. Les freins d'un véhicule automobile n'étant généralement pas complètement fermés, ces particules de poussière de freinage viennent alors directement se disperser dans le milieu ambiant.

Outre le fait d'être salissantes pour l'environnement immédiat des roues et notamment des jantes, ces particules sont surtout nocives pour la santé. En effet, ces particules peuvent être des nanoparticules ou des microparticules, les particules les plus fines étant reconnues comme étant particulièrement nocives pour la santé des individus en général, avec notamment un risque accru de développer des maladies respiratoires, allergiques et cardio- vasculaires.

Afin de réduire la pollution aux particules de poussière de freinage, il est connu de l'état de la technique de disposer à proximité du système de freinage un dispositif de filtration des particules.

Un tel dispositif de filtration comprend un boîtier délimitant un corps de collecte et logeant par exemple un filtre à particules et/ou une structure cyclonique, le boîtier comprenant une entrée de flux d'air sale et une sortie de flux d'air purifié, la circulation de l'air s'effectuant entre l'entrée et la sortie au travers du filtre et/ou de la structure cyclonique.

Afin de provoquer la circulation d'air à l'intérieur du boîtier, il est connu de l'art antérieur, notamment du document précité, de raccorder la sortie du boîtier à une « turbine », qui est la désignation communément utilisée pour désignée une pompe centrifuge.

Une telle pompe se présente généralement de façon connue en soi sous la forme d'un corps de pompe en forme de volute logeant une hélice rotative qui vient aspirer axialement dans la pompe, accélérer radialement et enfin refouler tangentiellement l'air purifié sortant du boîtier après filtration.

De cette façon, la poussière générée par le frottement entre la garniture de frein et la roue pendant le freinage est captée et filtrée dans le dispositif de filtration. En effet, au moyen de la pompe centrifuge d'aspiration, un flux d'air portant de la poussière est aspiré dans le boîtier de filtration. Le flux d'air est purifié au travers de l'organe de séparation avant d'arriver à la pompe centrifuge qui va le refouler vers l'extérieur.

Toutefois, le dispositif de filtration avec pompe centrifuge présente de nombreux inconvénients.

En effet, pour être efficace, de telles pompes doivent fonctionner à des vitesses de rotation élevées ce qui est à l'origine de nuisances sonores et de vibrations. Il est alors nécessaire de prévoir des accessoires additionnels pour limiter ces nuisances.

En outre, de telles pompes présentent des contraintes de fabrication pour limiter les fuites, ce qui impose des dimensionnements très exigeants entre la roue à aube et le corps en volute de la pompe.

Par ailleurs, de telles pompes centrifuges sont relativement coûteuses et il est donc souhaitable de limiter leur nombre dans le véhicule automobile. Il pourra alors être souhaitable de ne pourvoir qu'une unique pompe centrifuge pour créer l'aspiration des boîtiers de filtration des roues. Il est alors nécessaire dans ce cas de prévoir un réseau de conduits d'aspiration reliant la pompe unique à tous les boîtiers d'aspiration. Un tel système outre le fait d'être encombrant, présente des faiblesses notamment au niveau de la perte de charges globale et de la perte de puissance de la pompe centrifuge ainsi que des difficultés d'équilibrage des débits dans le réseau d'aspiration afin de garantir la même efficacité pour les agencements de frein du véhicule automobile.

Enfin, il est nécessaire d'optimiser la durée de fonctionnement de la pompe en la faisant fonctionner uniquement au cours de l'action de freinage dans le but de limiter des consommations d'énergie superflues ce qui nécessite un pilotage précis du fonctionnement de la pompe, relativement complexe à mettre en œuvre. Par exemple, la pompe est actionnée électroniquement via le réseau d'alimentation électrique de bord 12V lorsque le conducteur enfonce la pédale de frein.

La présente invention a pour but de remédier aux inconvénients précités de l'art antérieur en proposant un dispositif de dépollution par récupération de particules de poussière de freinage permettant de remédier à ces inconvénients, tout en étant particulièrement efficace, simple à réaliser et peu coûteux.

A cet effet, l'invention a notamment pour objet un dispositif dépolluant de récupération de particules de poussière de freinage, en particulier produites par une ou des plaquettes d'un agencement de frein d'un véhicule automobile, le dispositif comprenant un boîtier avec un orifice d'entrée d'un flux d'air sale chargé en particules et un orifice de sortie d'un flux d'air purifié, et au moins un organe de séparation, logé dans le boîtier, pour séparer des particules du flux d'air sale, au travers duquel le flux d'air circule entre les orifices d'entrée et de sortie, **caractérisé en ce que** le dispositif comprend un organe d'aspiration comprenant un corps pourvu d'un orifice d'admission configuré pour être raccordé à l'orifice de sortie du boîtier, d'un orifice de refoulement et d'un conduit de passage de fluide s'étendant entre les deux orifices et en ce que l'organe comprend une buse d'injection d'un fluide de propulsion dans le conduit et le corps comprend un orifice d'alimentation en fluide de propulsion raccordé à la buse, le conduit présentant un col d'étranglement d'une section de passage de fluide, localisée en aval de la buse, de façon à provoquer une aspiration du flux d'air entrant au travers de l'organe.

Par convention, dans la présente demande, les termes amont et aval sont définis par rapport au sens de circulation du fluide dans les différents éléments décrits. En outre, dans la présente invention, le terme « buse » est ici utilisé au sens large et définit un élément, par exemple destiné à être monté en extrémité d'une canalisation ou tuyau de transfert de fluide, adapté pour l'éjection d'un fluide de propulsion par un orifice d'éjection.

L'organe d'aspiration est relativement simple et peu onéreux à fabriquer. Cet organe présente l'avantage de produire une aspiration sans recourir à des pièces mobiles, grâce au principe de l'effet Venturi. Il peut ainsi se présenter sous forme d'une pièce unique à brancher directement à la sortie du boîtier collecteur ce qui évite de monter une pompe électrique par exemple centrifuge au niveau de chaque roue.

Par ailleurs, l'alimentation en fluide de propulsion de chaque organe d'aspiration des roues peut être réalisée de façon simple au moyen d'un circuit de distribution d'air comprimé par exemple. Un tel circuit de distribution d'air comprimé peut comprendre un unique réservoir de stockage d'air comprimé et un unique compresseur. Un tel circuit peut également présenter des canalisations avec une section de passage de fluide relativement petite sans nuire à l'efficacité du dispositif ce qui apporte un gain de poids et de coûts non négligeable. Par exemple, le compresseur est un compresseur volumétrique. Le pilotage de l'aspiration peut être réalisé simplement par pilotage d'une électrovanne en sortie du réservoir d'air comprimé et non par la mise en marche d'une pompe centrifuge voire même de quatre pompes centrifuges comme dans l'art antérieur.

Un dispositif selon l'invention peut comporter l'une ou plusieurs des caractéristiques suivantes.

Dans un mode de réalisation préféré, le corps comprend en aval du col, une chambre de détente de telle sorte que l'organe est configuré pour produire par son orifice de refoulement un fluide sortant de refroidissement par un effet de détente thermodynamique du fluide.

Dans la chambre de détente, le mélange de fluide formé par le fluide de propulsion et le fluide aspiré subit une variation de pression et également une chute de température par un phénomène thermodynamique de détente des fluides. En première approximation, on peut considérer qu'étant donnée la vitesse très rapide d'écoulement des fluides, les échanges de chaleur entre l'organe d'aspiration et le milieu extérieur sont négligeables et donc que la détente peut être considérée comme adiabatique. Ce flux de refroidissement peut être avantageusement mis à profit pour refroidir une partie active des plaquettes de frein qui au cours d'une action de freinage sont susceptibles de fortement s'échauffer. En diminuant la température des plaquettes, on peut réduire l'émission de particules de frein, car la température est un facteur amplificateur dans la génération des particules de frein.

Dans un mode de réalisation préféré, le conduit comprend une portion d'éjection située en aval du col dans laquelle la surface de la section utile du conduit augmente jusqu'à l'orifice de refoulement de façon à former la chambre de détente.

L'élargissement de la section du conduit de passage va avoir pour effet une chute de la pression entre l'entrée et la sortie de la chambre de détente.

Dans un mode de réalisation préféré, le dispositif comprend une canalisation d'acheminement de fluide partant de l'orifice de refoulement et qui est destinée à déboucher au voisinage des plaquettes, pour contribuer au refroidissement d'une partie active des plaquettes.

Dans un mode de réalisation préféré de l'invention, la buse s'étend à l'intérieur du corps de l'organe de façon à laisser un passage libre entre une paroi interne du corps et la buse pour permettre une circulation du flux d'air provenant de l'orifice d'admission au travers de l'organe.

Dans un mode de réalisation préféré, le dispositif comprend un canal tubulaire tube traversant radialement une paroi périphérique du corps de l'organe, le canal comprenant une extrémité interne centrée sur l'axe du corps et orientée vers l'orifice de refoulement et comprenant la buse, et une extrémité externe destinée à être raccordée à une canalisation d'alimentation en fluide de propulsion.

Dans un mode de réalisation préféré, l'organe comprend une portion d'entrée localisée en amont du col d'étranglement, cette portion d'entrée comprenant l'orifice d'admission et l'orifice d'alimentation de la buse en fluide de propulsion.

Dans un mode de réalisation préféré, la portion d'entrée présente un élargissement puis un rétrécissement de sa section de passage interne jusqu'au col d'étranglement.

Dans un mode de réalisation préféré, la buse est raccordée au corps de l'organe par un ou plusieurs supports, venus de matière avec le corps, par exemple des ailettes profilées.

Dans un mode de réalisation préféré, le corps de l'organe a sensiblement une forme tubulaire allongée délimitant une paroi périphérique autour d'un axe principal, le col d'étranglement délimitant une portion d'entrée relativement courte et une portion de sortie relativement longue, plus longue que la portion d'entrée.

Dans un mode de réalisation préféré, l'organe comprend une chambre de mélange du flux d'air entrant et du fluide de propulsion formée par une portion de conduit de forme sensiblement cylindrique prolongeant l'étranglement du col de façon sensiblement rectiligne.

Dans un mode de réalisation préféré, l'orifice d'admission est situé sur un axe principal du conduit de passage de l'organe ou sur un axe perpendiculaire à cet axe principal.

Dans un mode de réalisation préféré le boîtier est dimensionné pour être logé dans un espace environnant d'une roue de véhicule automobile, par exemple autour d'une jambe d'un amortisseur de suspension.

Dans un mode de réalisation préféré, le corps de l'organe comprend au moins une chambre d'amortissement du bruit agencée comme un résonateur d'Helmholtz.

En outre, l'invention a encore pour objet un système d'aspiration et de collecte de particules de poussières de freinage, **caractérisé en ce qu'il** comprend un dispositif dépolluant selon l'invention, le fluide de propulsion étant de l'air comprimé, un réservoir de stockage d'air comprimé, un compresseur recevant en entrée un flux d'air extérieur et alimentant en sortie ledit réservoir avec de l'air comprimé, et un circuit de distribution en air comprimé de la buse de l'organe et du réservoir.

Par exemple, le compresseur est un compresseur volumétrique. Le circuit de distribution d'air comprimé présente un réseau de canalisations de section qui peuvent être choisies relativement petites sans que cela n'affecte l'efficacité du système. De ce fait le gain de poids réalisé par la solution de l'invention est relativement important en comparaison d'une solution utilisant une pompe centrifuge d'aspiration qui nécessite des gros et longs tuyaux d'aspiration encombrants pour éviter la perte de charge et une perte de puissance de la pompe centrifuge. Par ailleurs, la solution de l'invention permet de garantir un équilibrage optimal de l'efficacité d'aspiration dans chacun des boîtiers d'aspiration du véhicule automobile.

Un système selon l'invention peut en outre comprendre les caractéristiques suivantes.

De préférence, l'air est mis sous une pression comprise entre 2 à 12 bars, de préférence comprise entre 2 et 6 bars. Par exemple, le réservoir de stockage a une contenance comprise entre 2 et 6 litres mais peut avoir une contenance supérieure ou inférieure.

Dans un mode de réalisation préféré, le compresseur produisant un réchauffement de l'air extérieur en compression par un phénomène thermodynamique de compression de fluide, une branche du circuit d'alimentation du réservoir comprend au moins une portion agencée en couplage thermique avec un organe à réchauffer de véhicule automobile, tel qu'une batterie de véhicule automobile électrique ou encore un échangeur thermique d'un circuit de chauffage du véhicule automobile.

De préférence, le compresseur est alimenté électriquement par récupération d'énergie lors d'une action de freinage ou lors d'une charge d'une batterie de véhicule automobile électrique.

L'invention a enfin pour objet un agencement de frein non polluant, comprenant un dispositif dépolluant selon l'invention, au moins deux plaquettes mobiles garnies de matériau de friction destinées à venir en appui sur un disque rotor pour le freiner sous une force de serrage fournie par un étrier de serrage, les plaquettes, un conduit d'aspiration, raccordant l'entrée du boîtier et comprenant au moins une bouche d'aspiration destinée à être positionnée au voisinage des plaquettes pour collecter les particules de poussière de freinage susceptibles d'être générées par abrasion du matériau de friction.

De préférence, l'agencement de frein comprend un conduit de refroidissement reliant l'orifice de refoulement de l'organe à une bouche de refroidissement destinée à être positionnée à proximité d'une partie active des plaquettes susceptible de s'échauffer lors d'une action de freinage.

D'autres caractéristiques et avantages de l'invention apparaîtront à la lumière de la description qui suit, faite en référence aux dessins annexés dans lesquels :

[Fig 1] : la figure 1 illustre une vue schématique d'un véhicule automobile incorporant un système de dépollution de particules de freinage selon l'invention ;

[Fig 2] : la figure 2 illustre une vue schématique de l'environnement d'une roue du véhicule automobile de la figure 1 comprenant le système de dépollution de l'invention ;

[Fig 3] : la figure 3 illustre une vue schématique du système de dépollution selon l'invention;

[Fig 4] : la figure 4 représente une vue en perspective d'un dispositif dépolluant du système dépolluant de la figure 3.

[Fig 5] : la figure 5 représente une vue en perspective du dispositif dépolluant comprenant un organe d'aspiration selon un premier mode de réalisation de l'invention

[Fig 6] : la figure 6 représente une vue en perspective de l'organe d'aspiration de la figure 5 ;

[Fig 7] : la figure 7 est une vue en coupe longitudinale de l'organe de la figure 6;

[Fig 8] : la figure 8 est une vue en coupe longitudinale d'un organe d'aspiration conforme à un deuxième mode de réalisation de l'invention.

Dans la description qui va suivre, on utilisera les termes amont et aval en fonction du sens de l'écoulement du fluide. Ainsi, lorsqu'il sera précisé dans la présente description, que dans un système, un dispositif ou un organe, un premier élément est en amont d'un deuxième élément, il faudra comprendre que le courant de fluide circulant dans ledit système, dispositif ou organe traverse le premier élément avant le deuxième élément.

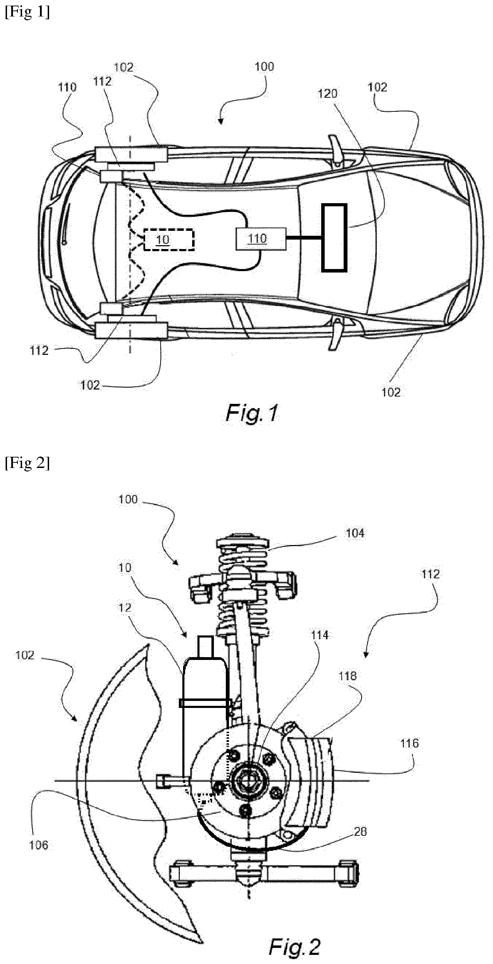

On a représenté sur **la** **figure 1** un véhicule automobile comprenant un système dépolluant par aspiration et collecte de particules de poussières de frein selon l'invention. Ce système est désigné par la référence générale 10 et le véhicule automobile est désigné par la référence générale 100. Dans le mode de réalisation préféré de l'invention, le véhicule 100 est un véhicule automobile, dans le cas d'espèce une voiture légère. Bien entendu, l'invention peut s'appliquer à d'autres véhicules, tels que des véhicules poidslourds, ou des véhicules ferroviaires ou autres.

De façon générale mais non limitative, ce véhicule 100 comprend quatre roues 102 et un système de freinage 110 qui a pour fonction de ralentir le véhicule et de le maintenir à l'arrêt notamment pendant des périodes relativement courtes. Le système de freinage 110 est configuré pour appliquer un couple de freinage à au moins deux des roues 102 du véhicule 100 et de préférence aux quatre roues 102 du véhicule. De façon classique, les roues 102 sont aptes à être entraînées en rotation par un groupe motopropulseur, par exemple un moteur thermique ou un moteur électrique (non représenté) ou tout autre type de propulsion.

A cet effet, ce système de freinage 110 comprend de préférence quatre agencements de frein 112 associés à chacune des roues 102 et une unité de gestion de ces agencements de frein (seulement deux agencements de frein 112 sont représentés sur **la** **figure 1****).** Ainsi, un usager du véhicule 100 peut piloter le système de freinage 110 par l'intermédiaire d'une unité de pilotage 120 du véhicule 100 qui pilote les agencements de frein 112 du système de freinage 110.

Un tel agencement de frein 112 est illustré en exemple sur **la** **figure 2****.** De façon préférentielle, cet agencement 112 est de type frein à disque. **La** **figure 2** illustre l'agencement de frein 112 monté sur une des roues 102 de véhicule 100, cette roue 102 étant partiellement représentée avec ses moyens de suspension 104.

Chaque agencement de frein 112 comprend de façon non limitative un disque rotor 114 tournant autour d'un axe X et solidaire en rotation de la roue 102 auquel il est associé. Cet axe X est généralement destiné à être fixé sur un moyeu 106 d'une roue 102 du véhicule 100.

En outre, l'agencement de frein 112 comprend un support 116 d'étrier disposé à cheval sur un bord extérieur du disque 114 et solidaire en rotation d'une partie fixe d'un châssis (non représenté) du véhicule 100. L'agencement de frein 112 comprend encore deux plaquettes de frein 118 (non directement visibles sur la figure 2) pourvues de garnitures réalisées en matériau de friction et montées de part et d'autre du disque 114 par l'intermédiaire du support d'étrier 116.

Ces plaquettes de frein 118 sont montées mobiles, par exemple sous l'effet d'un vérin hydraulique (non représenté), et sont destinées à venir serrer le disque rotor 114 pour le freiner jusqu'à l'arrêt de ce dernier en transformant l'énergie cinétique en énergie thermique. Les garnitures de plaquettes sont généralement réalisées en matériau de friction et relâchent des particules résultant de l'abrasion par frottement contre le disque 114. Pendant le freinage, le frottement entre la garniture de frein et le disque 114 génère de la poussière qui contient éventuellement des particules fines dangereuses pour la santé.

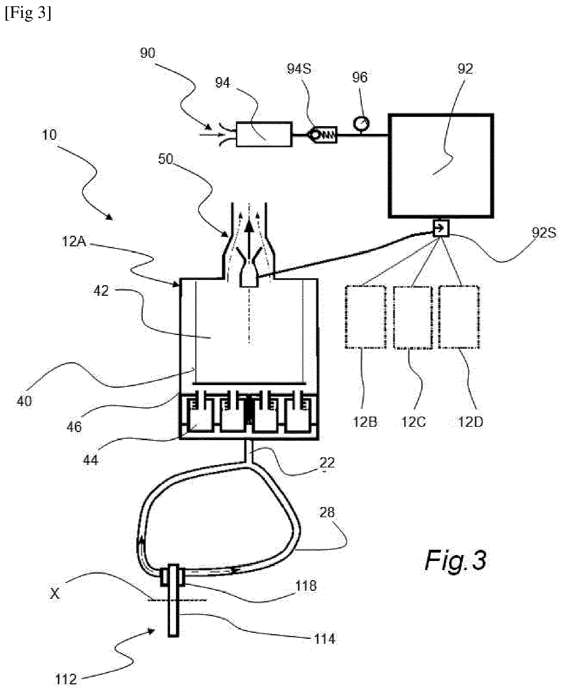

Afin de récupérer les particules de poussière de freinage, le système de récupération et de collecte 10 est destiné à aspirer et collecter des particules de poussières produites lors d'une action de freinage du véhicule automobile 100, en particulier d'un freinage à friction des agencements de frein 112 du véhicule 100 tels que décrits ci-dessus. Le système 10 est illustré schématiquement en détail sur **la** **figure 3****.**

Conformément à l'invention, le système 10 comprend au moins un dispositif 12 de dépollution selon l'invention et comprend autant de dispositif de dépollution 12 que d'agencements de frein. Par exemple, le système 10 comprend quatre dispositifs de dépollution 12A, 12B, 12C et 12D pour équiper les quatre agencements de frein 112 du véhicule 100. Dans la suite de la description, on ne décrira de façon détaillée qu'un seul dispositif de dépollution 12A qui sera désigné couramment par la référence générale 12.

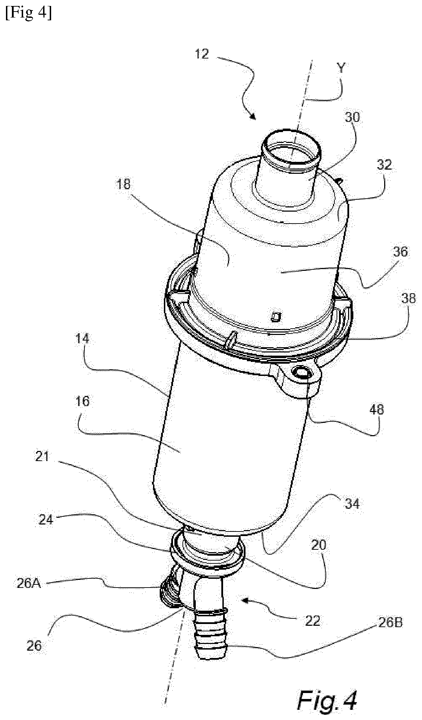

Le dispositif 12 a pour fonction de récupérer et de collecter des poussières et des particules de freinage, par exemple provenant d'un des agencements de freinage du véhicule automobile et est illustré en détail sur **la** **figure 4****.**

Le dispositif 12 comprend un corps de boîtier 14. Ce boîtier 14 a une forme générale tubulaire, en particulier cylindrique autour d'un axe principal Y-Y. Ce boîtier 14 se présente par exemple en deux parties 16 et 18 assemblées entre elles par divers procédés d'assemblage libérables ou non libérables qui ne seront pas plus détaillés.

En outre, ce corps de boîtier 14 comprend un orifice d'entrée 20 pour un flux d'air sale chargé en particules et prélevés dans l'environnement immédiat des plaquettes de frein 118.

A cet effet, le dispositif 12 comprend également un embout connecteur 22 destiné à être raccordé à l'orifice d'entrée 20 et à être raccordé à deux tuyaux flexibles 28 débouchant à proximité des plaquettes de frein 118 et représentés schématiquement **en** **figures 2** **et** **3****.** Cet embout 22 est divisé le long de son axe principal en une première partie 24 destinée à être raccordée à l'orifice d'entrée 20 et en une deuxième partie 26 séparée en deux branches 26A et 26B. Dans l'exemple illustré, chacune des branches 26A, 26B de l'embout connecteur 22 présente une extrémité de raccordement à un tuyau flexible 28, de préférence par emmanchement, qui est pourvue par exemple d'un relief externe en cran sapin. Par exemple, l'orifice d'entrée 20 se présente sous forme d'une canule 21 et l'embout connecteur 22 est raccordé de préférence par vissage sur la canule de raccordement 21 de l'orifice 20.

En outre, le corps de boîtier 14 comprend encore une sortie 30 pour l'évacuation d'un flux d'air purifié. Dans l'exemple illustré et de préférence, l'orifice d'entrée 20 et l'orifice de sortie 30 sont ménagés respectivement sur des parois d'extrémité 32 et 34 du corps de boîtier tubulaire 14, le corps de boîtier 14 présentant par exemple une paroi périphérique 36 sensiblement cylindrique et les parois d'extrémité 32 et 34, par exemple ayant une forme générale de disque.

Par ailleurs, le dispositif 12 comprend au moins un organe 40 de séparation, logé dans le boîtier 14, pour séparer des particules du flux d'air sale, au travers duquel le flux d'air circule entre l'entrée 20 et la sortie 30.

Un tel organe de séparation 40 peut comprendre une cartouche filtrante 42 ou encore une chambre cyclonique 44, voire multi-cyclonique ou encore une association des deux, comme cela est représenté très schématiquement sur **la** **figure 3****.** De tels organes de séparation 40 sont bien connus de l'art antérieur et sont décrits en détail par exemple dans la demande de brevet CN1864619A avec leurs fonctionnements associés et ne seront pas plus détaillés ci-après.

Par ailleurs, de façon préférentielle, le boîtier 14 est dimensionné pour être logé dans un espace environnant une roue 102 de véhicule automobile 100, par exemple autour d'une jambe d'un amortisseur de suspension 106 tel que cela est illustré sur **la** **figure 2****.** A cet effet, dans l'exemple illustré, le dispositif 12 comprend encore une bride 38 circonférentielle munie de deux pattes d'extension radiale 48 diamétralement opposées, chacune des pattes est par exemple percée pour retenir un jonc de fixation (non représenté).

En outre, le boîtier 12 est relié, via un conduit d'aspiration 28, par exemple formé par un des tuyaux flexibles 28A, 28B, à un des agencements de frein à disque 112. De préférence, le conduit d'aspiration 28A, 28B comprend une de ses extrémités située à proximité immédiate de la zone où cette poussière de frein est susceptible d'être générée. L'autre de ses extrémités débouche de préférence à l'intérieur du corps de collecte du dispositif 12 par l'orifice d'entrée 20 du boîtier 14 et l'embout connecteur 22.

Le dispositif de collecte 12 comprend encore un réservoir 46 de collecte logé à l'intérieur du boîtier 14. Par exemple, le réservoir 46 est associé à un premier organe de séparation 44 pour former une chambre 46 d'un séparateur cyclonique 44. Ce séparateur cyclonique 44 a pour but de capter les particules ayant un diamètre par exemple supérieur à 10 microns. Dans l'exemple illustré, le dispositif 12 comprend en outre un deuxième organe de séparation 42, formée par une cartouche filtrante chargée de traiter des particules présentant diamètre inférieur à 10 microns.

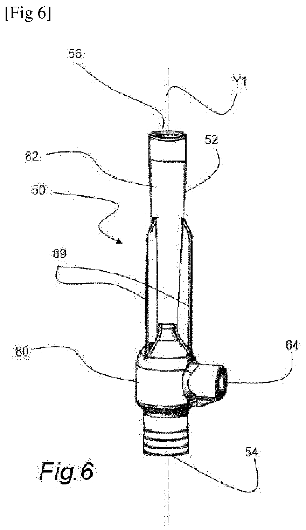

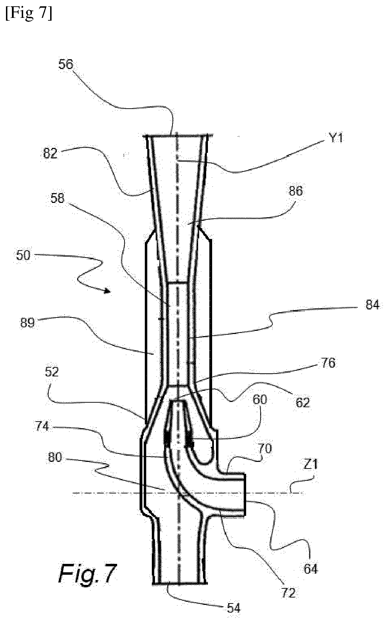

Conformément à l'invention, afin de provoquer une circulation d'air efficace à l'intérieur du boîtier de récupération 14 et de collecte entre l'entrée 20 et la sortie 30 de ce boîtier 14, le dispositif 12 comprend encore un organe 50 d'aspiration du flux d'air purifié, représenté schématiquement **en** **figure 3** et en détail sur **les** **figures 6** **et** **7****.**

Cet organe d'aspiration 50 est dit passif, par opposition à actif. En effet, l'organe d'aspiration 50 est de préférence réalisé sous forme d'une pièce inerte et statique, sans élément mobile ni élément moteur. Cet organe 50 a pour fonction principale de venir aspirer le flux d'air purifié en sortie du boîtier de collecte 14.

Comme cela est illustré sur **la** **figure 6****,** un tel organe 50 comprend un corps 52 de forme générale tubulaire s'étendant principalement longitudinalement selon un axe principal Y1-Y1. Ce corps 52 comprend un orifice 54 d'admission d'un flux d'air entrant et un orifice de refoulement 56.

De préférence, en configuration montée, le corps d'aspiration 52 est conformé pour communiquer avec le volume interne du boîtier 14 par la sortie 30 et le corps 52 est rapporté par un raccord étanche à l'air à la sortie du boîtier 12. L'orifice d'admission 54 est par exemple configuré pour être raccordé, de préférence de façon étanche à l'orifice de sortie 30 du boîtier de collecte 14. Par exemple, l'orifice d'admission 54 comprend un filetage externe destiné à coopérer avec un filetage interne d'un conduit de sortie 30 du boîtier 14. Un tel raccord peut comporter un joint d'étanchéité torique (non représenté) venant être comprimé axialement au niveau de reliefs prédéfinis (non représentés) de l'organe 50 et du boîtier 14 afin de garantir l'étanchéité du raccord en s'interposant entre l'organe 50 et le boîtier 14.

Par ailleurs, l'organe 50 comprend un orifice 56 de refoulement pour évacuer le courant de fluide traversant l'organe 50. En outre, l'organe 50 délimite un conduit interne 58 de passage de fluide s'étendant entre les deux orifices 54 et 56.

Conformément à l'invention, l'organe 50 comprend une buse 60 d'injection d'un fluide moteur s'étendant à l'intérieur du conduit 58. La buse 60 comprend dans cet exemple une partie d'extrémité 62 en forme de pointe par laquelle le fluide moteur ou fluide de propulsion est éjecté dans le conduit 58. Par ailleurs, la buse 60 est alimentée par une source d'alimentation en fluide compressible externe au dispositif 12, par exemple de l'air comprimé, comme cela sera décrit de façon détaillée ci-après. Le fluide moteur ou de propulsion est de préférence de l'air comprimé à une pression supérieure à celle de l'atmosphère, par exemple supérieure à 2 bars. La buse 60 a par exemple une forme générale conique en forme de cône convergent pourvue d'une pointe d'éjection 62 délimitant une ouverture de propulsion du fluide comprimé.

L'organe 50 comprend également à cet effet un orifice 64 d'alimentation en fluide de propulsion raccordé fluidiquement à la buse 60.Dans l'exemple illustré sur **la** **figure 7****,** l'organe 50 comprend un canal tubulaire 70 traversant radialement une paroi périphérique du corps 52 de l'organe 50 pour l'alimentation de la buse 60. Ce canal 70 présente une partie externe 72 s'étendant hors de l'organe 50 et pourvue d'une ouverture circulaire pour son raccordement à une canalisation d'alimentation en fluide de propulsion (représentée schématiquement en figure 3) et une partie d'extrémité interne terminale 74 se prolongeant par la buse 60.

Dans le mode de réalisation préféré de l'invention, la buse 60 est montée en extrémité du canal tubulaire 70 qui est configuré de préférence pour opérer une déviation de la direction d'écoulement du fluide moteur depuis l'orifice d'alimentation 64 jusqu'à la pointe 62 de la buse 60 qui est centrée sur l'axe Y1-Y1 et orientée vers l'orifice de refoulement 56. Par exemple, la direction d'écoulement du fluide moteur est légèrement modifiée d'un angle d'environ 90° par ce canal tubulaire 70. De préférence, ce canal tubulaire 70 présente un profil curviligne et est incurvé de manière régulière afin de diminuer toute résistance à l'écoulement du fluide moteur pour atteindre la buse 60.

Afin de provoquer une aspiration d'un flux d'air entrant par l'orifice d'admission, le corps de l'organe 50 présente un col d'étranglement 76 formé par un rétrécissement du passage de son conduit 58, localisé en aval d'une zone d'éjection du fluide moteur par la buse 60 dans le conduit 58 et en particulier en aval de la pointe 62 de la buse 60. Pour la suite de la description, on définit dans l'organe 50 une portion d'entrée 80 en amont de l'étranglement et une portion de sortie 82 en aval de l'étranglement selon l'axe longitudinal Y1-Y1 de l'organe 50.

En fonctionnement, on comprendra que le jet de fluide moteur éjecté par la pointe 62 de la buse 60 entraîne une diminution de la pression autour de la pointe 62. La diminution de la pression produit un effet d'aspiration, de sorte que le flux d'air entrant est entraîné dans la portion aval de sortie 82 de l'organe 50 pour être refoulé par l'orifice de refoulement 56 en étant mélangé au fluide moteur.

De préférence, le corps 52 de l'organe a sensiblement une forme tubulaire allongée délimitant une paroi tubulaire interne autour d'un axe principal délimitant la portion d'entrée 80 relativement courte et la portion de sortie 82 relativement longue, séparées par l'étranglement 76. Par exemple, la portion de sortie 82 est deux fois plus longue que la portion d'entrée 80.

Dans cet exemple, cette portion d'entrée 80 comprend l'orifice d'admission 54 et l'orifice d'alimentation 64 de la buse 60 en fluide moteur.

Dans le cas illustré sur **la** **figure 7****,** l'organe 50 est désigné par éjecteur en ligne car le fluide moteur est éjecté dans la même direction que le flux du fluide à pomper à l'intérieur du conduit. En effet, comme cela est représenté sur **la** **figure 7****,** la buse 60 et l'orifice d'admission 54 sont alignés selon l'axe principal du conduit 58.

De préférence, la buse 60 s'étend à l'intérieur du corps 52 de l'organe 50 de façon à laisser un passage libre entre une paroi interne du conduit 58 du corps 52 et la buse 60 pour permettre une circulation du flux d'air provenant de l'orifice d'admission 54.

Par exemple, dans la portion d'entrée 80, la buse 60 est raccordée au corps 52 de l'organe 50 par un ou plusieurs supports, venus de matière avec le corps, par exemple sous forme d'ailettes profilées (non représentées). Eventuellement, en variante, la buse 60 peut être interchangeable pour être remplacée en cas d'usure. Dans l'exemple illustré sur les figures, la portion d'entrée 80 est élargie en amont de l'étranglement 76 pour délimiter un volume interne de logement de la buse 60. Le corps 52 de l'organe 50 comprend une portion d'entrée élargie 80 à l'intérieur de laquelle est logée la buse 60. Le diamètre interne du corps 52 s'élargit immédiatement après l'orifice d'admission 54. Après l'élargissement initial, le diamètre du corps 52 devient sensiblement constant dans la portion du corps 52 qui loge la buse 60 et devient fortement convergent en direction de l'extrémité de la buse 60 jusqu'au col d'étranglement 76. Ainsi, comme cela est visible sur la figure, l'extrémité de la buse 60 débouche dans la portion d'étranglement 76 par une portion convergente de la portion d'entrée 80 du corps 52.

De préférence, le corps 52 est conformé pour produire par son orifice de refoulement 56 un flux de fluide sortant de refroidissement, ce refroidissement étant obtenu par un phénomène thermodynamique de détente du fluide moteur à l'intérieur de l'organe 50.

A cet effet, le conduit 58 comprend dans la partie aval de sortie 82 une portion d'éjection 86 située en aval du col d'étranglement 76 et dans laquelle la surface de la section utile du conduit 58 augmente jusqu'à l'orifice de refoulement 58, de façon à permettre la détente du mélange de fluides.

Par ailleurs, de préférence, le corps 52 de l'organe 50 présente une portion de constriction 84 allongée de forme sensiblement cylindrique pour former une chambre de mélange du fluide moteur et du flux d'air aspiré, qui s'étend entre le col 76 et la portion d'éjection 86, prolongeant ainsi de façon rectiligne l'étranglement du conduit 58.

Ainsi, plus précisément, la portion aval de sortie 82 comprend une partie de constriction ou d'étranglement 84 et une partie divergente 86, également appelée diffuseur. La partie de constriction 84 a une forme générale cylindrique avec un diamètre essentiellement constant. Cette partie de constriction 84 a pour fonction de stabiliser les courants dans les flux mélangés et d'optimiser ainsi le mélange du fluide moteur et du flux d'air purifié.

De préférence, le dispositif 12 comprend encore un tuyau (non représenté) raccordé à l'orifice de refoulement 56 de l'organe 50 et débouchant au voisinage des plaquettes de frein 118, pour contribuer au refroidissement de la partie active des plaquettes de frein 118 par refoulement du mélange de fluide sortant, par exemple en débouchant à une distance de quelques millimètres d'une partie active des plaquettes de frein 118.

Il est souhaitable que la dimension des sections de passage du conduit 58 soit déterminée précisément par le calcul de manière à éviter de générer des conditions d'écoulement soniques ou supersoniques. Après l'injection du fluide de propulsion dans le conduit 58, l'écoulement est accéléré et en cas de section de passage immédiatement en aval trop faible ou en cas de débit trop important, de telles conditions d'écoulement peuvent être atteintes.

A cet effet, la portion de diffuseur 86 qui présente un diamètre interne croissant en direction de la sortie S permet de faciliter l'éjection des fluides vers l'extérieur en régime subsonique. Cette conformation de la portion de diffuseur 86 a pour effet une diminution de sa vitesse qui devient subsonique.

On notera également que comme cela est visible sur **la** **figure 7****,** la section transversale de sortie de l'organe 50 au niveau de l'orifice de refoulement 56 est sensiblement la même que la section transversale d'entrée de l'organe 50 au niveau de l'orifice d'admission.

De préférence, l'organe 50 est réalisé en une seule pièce. La buse 60 et le canal de changement de direction du fluide sont raccordés au corps par un ou plusieurs supports venus de matière avec le corps. L'organe est formée par moulage par injection d'une matière plastique pour former une pièce de révolution creuse délimitant un conduit interne. L'organe 50 peut présenter sur son corps 52 des nervures de rigidification 89, visibles sur **la** **figure 6** **ou** **7****.**

De façon avantageuse, l'organe d'aspiration 50 est relié au boîtier par des moyens de fixation appropriés tels que, par exemple des rivets, des boulons et des écrous, des soudures, des filetages complémentaires, par pincement longitudinal entre deux parties du corps 52 de l'organe 50.

En variante, l'organe 50 peut présenter une bride périphérique de fixation adaptée pour contourner le périmètre extérieur du corps de l'organe 50 autour de son orifice de fluide à pomper. Dans ce cas, la bride est pourvue de trous pour le montage de l'organe à l'aide de boulons et d'écrous. Par ailleurs, de façon optionnelle, afin de garantir l'étanchéité de ce raccord, il est possible de prévoir une garniture d'étanchéité. Le corps présente en outre une conduite d'aspiration pourvue d'un filetage interne destinée au raccordement de la pompe à éjecteur au volume interne du boîtier de collecte. En variante non illustrée, la conduite d'aspiration est pourvue d'un embout de connexion comprenant des crans sapins pour son emmanchement à l'intérieur de la tubulure de sortie du boîtier de collecte.

De façon optionnelle, l'agencement de frein 112 comprend un tuyau d'acheminement du flux d'air purifié en sortie de l'organe d'aspiration 50, refroidi par un phénomène thermodynamique de détente l'organe 50, au voisinage des plaquettes de frein 118, pour contribuer au refroidissement de la partie active des plaquettes de frein 118.

En outre, comme cela est illustré sur **la** **figure 3****,** le système 10 d'aspiration et de collecte de particules de poussières de freinage comprend un circuit 90 de compression de fluide et un réservoir de fluide 92 comprimé pour former la source d'alimentation de la buse 60. Le système de récupération 10 comprend un compresseur 94 alimentant en fluide sous pression le réservoir 92. A titre d'exemple, le réservoir 92 a une contenance comprise entre 2 et 6 litres et le fluide sous pression comprend de l'air comprimé compris entre 2 à 12 bars et de préférence entre 2 et 6 bars.

Par ailleurs, le système 10 comprend un réseau d'alimentation en fluide sous pression comprenant un ensemble de canalisation de transfert de fluide raccordant le compresseur 94 et le réservoir 92 d'une part et le réservoir 92 et l'orifice d'alimentation de l'organe d'autre part.

Ce circuit 90 comprend le compresseur 94 recevant en entrée un flux d'air extérieur et délivrant en sortie de l'air comprimé. Le circuit 90 comprend encore de préférence un capteur de pression 96 et un clapet anti-retour 94S en sortie du compresseur 94 et des canalisations de transfert de fluide. Le circuit 90 pourra comprendre en outre des vannes, électrovannes et autres éléments assurant un fonctionnement optimal du système 10. Par exemple, le circuit 90 comprend une électrovanne 92S en sortie du réservoir 92 pour la distribution sélective de fluide aux dispositifs 12A, 12B, 12C et 12D. Eventuellement, en variante, afin d'augmenter le temps de réaction, il est possible d'utiliser une électrovanne pour chaque dispositif dépolluant 12A, 12B, 12C ou 12D. Le compresseur 94 est choisi par exemple parmi une pompe de type volumétrique, une pompe à lobes, une pompe « root », une pompe à palettes et une pompe péristaltique.

De préférence, comme le compresseur 94 produit un échauffement de l'air extérieur lors de la compression par un phénomène thermodynamique de compression de fluide, le réseau de transfert de fluide 90 du réservoir 92 comprend au moins une portion agencée en couplage thermique avec un organe à réchauffer du véhicule automobile 100. Cet organe est par exemple une batterie de véhicule automobile ou encore un échangeur thermique d'un circuit de régulation de la température de l'habitacle du véhicule automobile. Au sens de la présente invention, deux éléments sont couplés thermiquement lorsqu'ils ont des échanges thermiques significatifs.

De préférence, le compresseur 94 est alimenté électriquement par récupération d'énergie lors d'une action de freinage ou lors d'une charge d'une batterie de véhicule automobile électrique. Le réservoir 92 forme ainsi une réserve d'énergie sous forme d'air comprimé pour assurer le fonctionnement du dispositif de collecte 12 à chaque action de freinage.

De préférence, le système 10 selon l'invention met en marche ou en fonctionnement la compression 94 de l'air extérieur pendant des périodes prédéfinies de récupération d'énergie ou de charge électrique du véhicule et non uniquement lorsque des poussières de frein vont être libérées par le frein à disque, à savoir lorsque le véhicule subit une consigne de freinage. De façon avantageuse mais non limitative, cette solution de collecte de particules de poussière de frein selon l'invention peut ne nécessiter aucune alimentation en énergie, autrement dit elle est totalement autonome en ce qu'elle utilise des mouvements du véhicule, en l'espère des accélérations pour récupérer de l'énergie qu'elle restitue lors des phases de libération des particules de poussière de frein libérées lors d'action de freinage du véhicule.

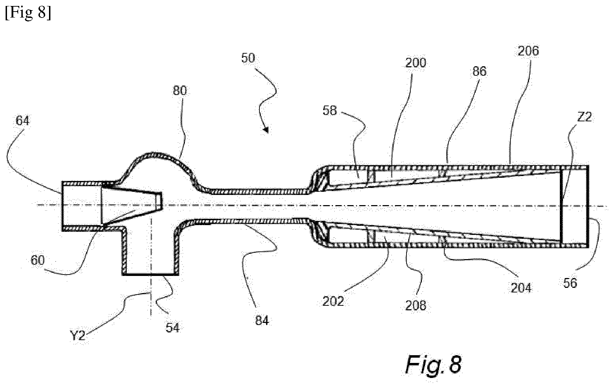

On a représenté sur **la** **figure 8** un deuxième mode de réalisation de l'invention illustré sur **la** **figure 8****.** Dans ce deuxième mode de réalisation, les éléments analogues au premier mode de réalisation portent des références identiques.

Dans ce deuxième mode de réalisation, la buse 60 s'étend par exemple dans le prolongement du conduit 58 selon l'axe longitudinal Z2-Z2 de l'organe 50 et l'orifice d'admission 54 est ménagé sur une portion périphérique de l'organe 50 et non selon l'axe longitudinal Z2-Z2 du conduit 58. **Sur la** **figure 8****,** la buse 60 est disposée dans ce cas selon l'axe Z2-Z2 sans tube de déviation de l'écoulement fluidique. Toutefois, la disposition relative de la buse 60 et de l'orifice d'admission 54 telle que décrite dans le premier ou le deuxième mode de réalisation consiste en une variante de réalisation qui n'est aucunement limitative.

De préférence, comme cela est illustré dans ce deuxième mode de réalisation, le corps 52 de l'organe 50 comprend au moins une chambre 200 agencée comme un résonateur d'Helmholtz. Par exemple, la portion de diffuseur 86 de l'organe 50 possède des chambres 202 agissant comme un résonateur d'Helmholtz. De telles chambres 202 sont alors par exemple formées entre une paroi du conduit de passage 58 et une paroi externe de l'organe 50 et sont délimitées de façon sectorielle par des cloisons 204 qui s'étendent radialement entre les deux parois.

On notera en outre que ces cloisons radiales 204 de délimitation des chambres 202 de résonance améliorent aussi les propriétés relatives à la mécanique de structure de l'organe, ce qui permet d'augmenter la rigidité de l'organe 50. Par ailleurs, lesdites chambres 202 présentent en outre de préférence des orifices de communication avec la portion interne du conduit 58 formant le diffuseur formés par exemple par des perçages de diamètre circulaire (non visibles sur les figures). En fonctionnement, le volume des chambres 202 peut être rempli avec du fluide circulant via ces orifices. Le fluide circulant agit alors comme un système oscillant de masse-ressort et sert à atténuer les bruits et sifflements des ondes de pression de détente des fluides circulants dans l'organe 50. En variante, l'organe 50 peut comprend une mousse d'isolation acoustique permettant l'isolation acoustique de l'organe 50 (non représentée).

Enfin, dans ce deuxième mode de réalisation, comme cela est illustré **en** **figure 8****,** l'organe 50 peut se présenter en deux pièces distinctes comprenant un corps principal de révolution 206 et un corps secondaire 208 pourvues de cloisons radiales externe 204 et monté par ajustement serré à l'intérieur du corps principal 206 en se terminant légèrement en retrait de l'orifice 56 de refoulement. De préférence, ce corps secondaire 208 est monté à l'intérieur du corps principal 206 pour former intérieurement une chambre de détente 86 de l'organe 50 et également extérieurement les chambres de résonances 202. Le corps secondaire 208 présente une forme de révolution de cône tronqué orienté par sa plus large section en direction de l'orifice de refoulement 56.

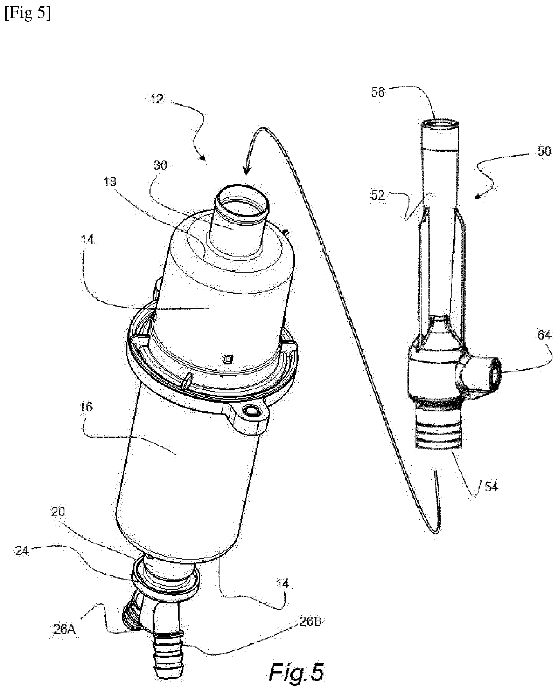

Les principaux aspects de l'invention vont maintenant être décrits en référence aux **figures 1 à 7** conformément au premier mode de réalisation préféré de l'invention.

Initialement, on considérera que le réservoir 92 est rempli suffisamment pour assurer la collecte de poussières pendant une action de freinage. Dans le cas contraire, le compresseur 94 crée un flux entrant d'air de l'atmosphère et le monte en pression dans le réservoir 92. La pression dans le réservoir 92 est régulée grâce au capteur de pression. Le réservoir 92 est maintenu dans un état de rempli grâce au clapet anti-retour 94S. On notera par ailleurs que si la capacité du réservoir 92 est assez grande pour assurer plusieurs cycles de freinage, le compresseur 94 ne nécessite pas un pilotage précis. Une contenance adaptée du réservoir 92 est par exemple comprise entre 2 Litres et 6 Litres par exemple mais cette contenance n'est en rien limitative.

Par ailleurs, dans le cas d'un véhicule électrique, les tuyaux d'alimentation du réservoir 92 en sortie du compresseur 94 pourront avantageusement fournir de l'énergie thermique par échange thermique avec la batterie en cas de températures extérieures relativement froides.

Au cours d'une première étape, l'usager du véhicule 10 actionne le frein de son véhicule 10. Lors de cette action de freinage, des particules de poussières de freinage liées à l'abrasion des garnitures de frein sont rejetées. Lors de l'actionnement du frein, le système de freinage pilote simultanément l'électrovanne 92S pour assurer l'alimentation en fluide de propulsion de l'organe 50 de chaque dispositif 12 au travers des tuyaux de transfert de fluide du circuit de distribution 90.

On notera que comme la pression du fluide est élevée dans les tuyaux du circuit 90 de transfert du fluide de propulsion, les tuyaux peuvent présenter une section de passage de petit diamètre tout en assurant la puissance nécessaire d'entraînement. De façon connue en soi, la puissance d'entraînement est obtenue par le produit du débit volumique par la pression du fluide. En dimensionnant correctement les tuyaux par rapport à la restriction du col d'étranglement de l'organe 50, la perte de charge globale peut être relativement faible car la principale perte de pression se situe au niveau de l'étranglement. Il en découle que le gain en encombrement et en coût de la solution de l'invention est important.

Dans l'organe 50, la propulsion du fluide par la pointe 62 de la buse 60 produit au niveau du col d'étranglement 76, autour de la pointe 62, une zone de dépression. Cette zone de dépression va produire un effet d'aspiration qui va venir entraîner le flux d'air purifié au travers de l'organe 50.

Ainsi, le flux d'air sale est entraîné par aspiration par le tuyau 28 et entre dans le boîtier 24. Il se décharge d'une partie de ses particules de poussières par le ou les organes de séparation 40 qu'il traverse au cours de son trajet dans le boîtier 24 du dispositif 12. Le flux d'air sale ainsi purifié sort par l'orifice de sortie 30 du boîtier 24 et entre dans l'organe 50.

Le flux entrant vient rejoindre le fluide de propulsion dans la chambre de mélange 84 située après le col d'étranglement 76. Dans cette chambre de mélange 84 sensiblement cylindrique d'une section constante sensiblement égale à la section du col 76, la vitesse d'écoulement du mélange de fluides atteint un maximum et cette chambre 84 vient favoriser le mélange des deux fluides.

Ensuite, le mélange de fluides est délivré à une chambre de détente 86 dans laquelle le mélange de fluides se dilate et subit une chute de pression ainsi qu'une décélération. De cette manière, cette détente thermodynamique va créer un refroidissement du mélange de fluides et l'organe 50 produit un flux d'air de refroidissement refoulé par son orifice de refoulement 56, vers une partie active de la plaquette de frein 118, par exemple au travers du tuyau de refroidissement. Ce refroidissement a pour effet bénéfique de réduire l'émission des particules émises lors du freinage en réduisant l'échauffement des plaquettes de frein 118 lors du freinage. Il a en effet été révélé par une récente étude scientifique que l'émission de particules de freinage augmentait avec la température des plaquettes de frein 118. Par ailleurs, indépendamment du refroidissement généré par le phénomène de détente, la convection forcée créée par le flux sortant du tuyau reliant la sortie de l'organe et la bouche de refoulement située à proximité des plaquettes de frein permet de favoriser les échanges de chaleur entre le flux d'air sortant et une zone de chauffe des plaquettes de frein.

L'invention ne se limite pas aux modes de réalisation précédemment décrits. D'autres modes de réalisation à la portée de l'homme du métier peuvent aussi être envisagés sans sortir du cadre de l'invention définie par les revendications ci-après. C'est ainsi, notamment que l'on ne s'éloignerait pas du cadre de l'invention en modifiant les formes de détail de l'organe.

## Revendications

1. Dispositif (12) dépolluant de récupération de particules de poussière de freinage, en particulier produites par une ou des plaquettes (118) d'un agencement (112) de frein d'un véhicule automobile (102), le dispositif (12) comprenant un boîtier (14) avec un orifice d'entrée (20) pour un flux d'air sale chargé en particules et un orifice de sortie (30) pour l'évacuation d'un flux d'air purifié, et au moins un organe (40) de séparation, logé dans le boîtier (14), pour séparer des particules du flux d'air sale, au travers duquel le flux d'air circule entre les orifices d'entrée (20) et de sortie (30), **caractérisé en ce que** le dispositif (12) comprend un organe d'aspiration (50) comprenant un corps (52) pourvu d'un orifice (54) d'admission configuré pour être raccordé à l'orifice de sortie (30) du boîtier (14), d'un orifice de refoulement (56) et d'un conduit de passage (58) de fluide entre les deux orifices (54, 56) **et en ce que** l'organe (50) comprend une buse (60) d'injection d'un fluide de propulsion dans le conduit (58) et le corps (52) comprend un orifice (64) d'alimentation en fluide de propulsion raccordé à la buse (60), le conduit (58) présentant un col d'étranglement (76) d'une section de passage de fluide, localisée en aval de la buse (60), de façon à provoquer une aspiration du flux d'air entrant au travers de l'organe (50).

2. Système (10) d'aspiration et de collecte de particules de poussières de freinage, **caractérisé en ce qu'**il comprend :
- un dispositif dépolluant (12) selon l'une quelconque des revendications précédentes,
- un réservoir (94) d'air comprimé,
- un compresseur (94) recevant en entrée un flux d'air extérieur et alimentant en sortie ledit réservoir (92) avec de l'air comprimé, et
- un circuit (90) d'alimentation en air comprimé du réservoir (92) et de la buse (60) de l'organe (50).

3. Agencement de frein non polluant, comprenant :
- un dispositif dépolluant (12) selon l'une quelconque des revendications 1 à 14,
- au moins deux plaquettes mobiles (118) garnies de matériau de friction destinées à venir en appui sur un disque rotor (114) pour le freiner sous une force de serrage fournie par un étrier de serrage, les plaquettes,
- un conduit d'aspiration, raccordant l'entrée du boîtier (24) du dispositif (12) et comprenant au moins une bouche d'aspiration destinée à être positionnée au voisinage des plaquettes (118) pour collecter les particules de poussière de freinage susceptibles d'être générées par abrasion du matériau de friction.
